# EUROPEAN PATENT APPLICATION

(11) **EP 2 829 956 A2**
(43) Date of publication of application: **28.01.2015**
(21) Application number: 14177522.1
(22) Date of filing: 17.07.2014
(51) Int. Cl.: G06F 3/041, G06F 3/042, H04N 9/31

(54) **Projector**

(30) Priority: 24.07.2013 JP 2013153263
(71) Applicant: Funai Electric Co., Ltd., Daito-shi, Osaka 574-0013 (JP)
(72) Inventor: Takahashi, Kazuhiro, Daito-shi Osaka 574-0013 (JP); Hirano, Atsuya, Daito-shi Osaka 574-0013 (JP)
(74) Representative: Global IP Europe Patentanwaltskanzlei

(57) **Abstract**

A projector includes a light scanner, a light detector, a converging lens, and a light guide member. The light scanner is configured to scan light over a projection surface. The light detector is configured to detect reflected light of the light that has been reflected by a detection object. The converging lens is disposed between the projection surface and the light detector to guide the reflected light within a convergence range of the converging lens to the light detector. The light guide member is configured to refract or reflect at least the reflected light outside the convergence range of the converging lens in a widthwise direction parallel to the projection surface in plan view such that the reflected light within a detection range of the projector that is wider than the convergence range in the widthwise direction is guided to the light detector.

## Description

### CROSS-REFERENCE TO RELATED APPLICATIONS

This application claims priority to Japanese Patent Application No. 2013-153263 filed on July 24, 2013. The entire disclosure of Japanese Patent Application No. 2013-153263 is hereby incorporated herein by reference.

### BACKGROUND

### Field of the Invention

The present invention generally relates to a projector. More specifically, the present invention relates to a projector with a light detector.

### Background Information

A projector equipped with a light detector is well known in the art (see Japanese Unexamined Patent Application Publication No. 2010-244484 (Patent Literature 1), for example).

The above-mentioned Patent Literature 1 discloses a projector having a scan mirror that scans light over a projection surface, and a light receiving element that detects light that has been scanned by the scan mirror and reflected by a detection object. This projector is placed on a table or the like, and is configured so that light for forming an image is shined downward. The image is projected onto a projection surface on the table. The light receiving element is disposed at a specific location inside the projector, at a specific distance away from the projection surface. This projector is also configured so that the light reflected by the detection object within the projection surface is detected by the light receiving element. This tells the system that the projection surface has been touched by a finger, a pen, or another such detection object. Thus, the user's input operations to icons (buttons) displayed on the projection surface are accepted.

Also, with a conventional projector such as this, a converging lens is provided that is disposed between the light receiving element and the projection surface and that guides light reflected by the detection object to the light receiving element. The light receiving element is configured so that the light reflected by the detection object inserted into a range between the projection surface and a detection reference position separated by a specific height from the projection surface will be incident via the converging lens. Here, the accuracy of touch detection in a direction perpendicular to the projection surface (the height of the detection object) is related to the positions (arrangement distance) of the converging lens and the light receiving element. That is, if the converging lens and the light receiving element are disposed close to each other, there will be more variance in the height of touch detection (deviation in the height of the detection object) with respect to positional deviation between the converging lens and the light receiving element in the direction perpendicular to the projection surface. Thus, good height accuracy is needed in positioning in the height direction of the light receiving element. In view of this, it is also possible to increase the distance between the light receiving element and the converging lens in order to moderate the accuracy of positioning in the height direction of the light receiving element (the direction perpendicular to the projection surface).

### SUMMARY

Nevertheless, with the conventional projector discussed in the above-mentioned Patent Literature 1, if the distance between the light receiving element and the converging lens is increased in order to moderate the accuracy of positioning in the height direction of the light receiving element (the direction perpendicular to the projection surface), then only part of the light component in a direction parallel to the projection surface, which has spread out widely after passing through the converging lens, will be detected by the light receiving element. It has been discovered that this creates a new problem in that the detection range of the light component in the direction parallel to the projection surface ends up being smaller than the width of the projection surface.

One aspect is to provide a projector with which the detection range of a light component in the direction parallel to the projection surface is less likely to be smaller than the width of the projection surface, while the positioning accuracy in the height direction of the light detector can be moderated.

In view of the state of the known technology, a projector is provided that includes a light scanner, a light detector, a converging lens, and a light guide member. The light scanner is configured to scan light over a projection surface. The light detector is configured to detect reflected light of the light that has been reflected by a detection object. The converging lens is disposed between the projection surface and the light detector to guide the reflected light within a convergence range of the converging lens to the light detector. The light guide member is configured to refract or reflect at least the reflected light outside the convergence range of the converging lens in a widthwise direction parallel to the projection surface in plan view such that the reflected light within a detection range of the projector that is wider than the convergence range in the widthwise direction is guided to the light detector.

Also other objects, features, aspects and advantages of the present disclosure will become apparent to those skilled in the art from the following detailed description, which, taken in conjunction with the annexed drawings, discloses one embodiment of the projector.

### BRIEF DESCRIPTION OF THE DRAWINGS

Referring now to the attached drawings which form a part of this original disclosure:
FIG. 1 is a perspective view of a projector in accordance with a first embodiment;
FIG. 2 is a block diagram of the projector in accordance with the first embodiment;
FIG. 3 is a diagram of a state in which light reflected by a detection object is guided to a light detector in the projector in accordance with the first embodiment;
FIG. 4 is a plan view of a state in which the light reflected by the detection object is refracted by a prism in the projector in accordance with the first embodiment;
FIG. 5 is a side elevational view of the light detector of the projector in accordance with the first embodiment;
FIG. 6 is a detailed side elevational view of the light detector of the projector in accordance with the first embodiment;
FIG. 7 is a plan view of a state in which light reflected by a detection object is refracted by a light guide member of a projector in accordance with a second embodiment;
FIG. 8 is a side elevational view of the light guide member of the projector in accordance with the second embodiment;
FIG. 9 is a plan view of a state in which light reflected by a detection object is refracted by a low reflection-processed prism of a projector in accordance with a third embodiment;
FIG. 10 is a side elevational view of the low reflection-processed prism of the projector in accordance with the third embodiment;
FIG. 11 illustrates a prism of the projector in accordance with a first modification example of the first embodiment;
FIG. 12 illustrates a prism of the projector in accordance with a second modification example of the first embodiment; and
FIG. 13 illustrates a prism of the projector in accordance with a third modification example of the first embodiment.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

### FIRST EMBODIMENT

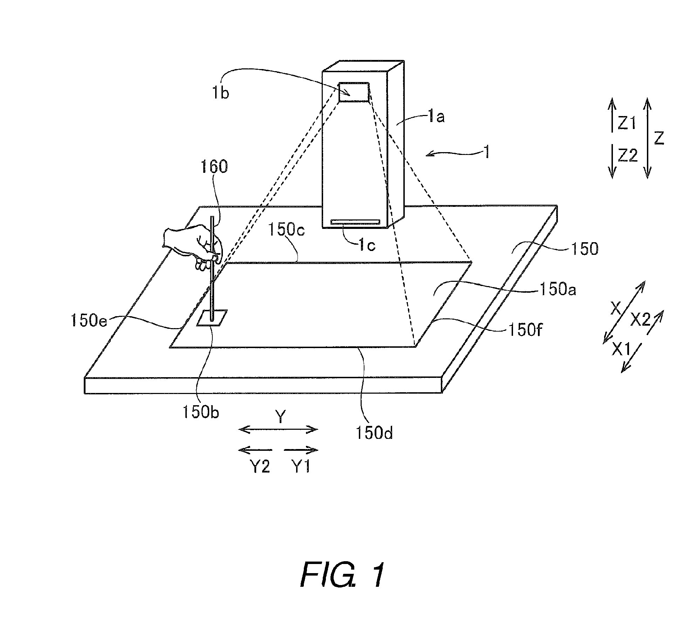

Referring to FIGS. 1 to 6, a projector 1 is illustrated in accordance with a first embodiment.

As shown in FIG. 1, the projector 1 in accordance with the first embodiment is used when placed on a table 150 or the like. The projector 1 includes on its upper side (Z1 direction side) an opening 1b through which laser light is emitted from a housing 1a toward a projection surface 150a. Also, the projector 1 includes on the projection surface 150a side (Z2 direction side) an opening 1c through which the laser light reflected by a detection object 160 is incident on the inside of the housing 1a. The opening 1c is provided on a side face of the housing 1a on the projection surface 150a side (X1 direction side). This projector 1 is configured so that an image 150b (video) of an icon (button) or the like to be selected by the user is projected onto the projection surface 150a on the table 150. The projector 1 is also configured so that a touch operation, in which the image 150b projected onto the projection surface 150a is touched by the detection object 160, such as the user's finger or a pen, is detected, and input is made based on touch input.

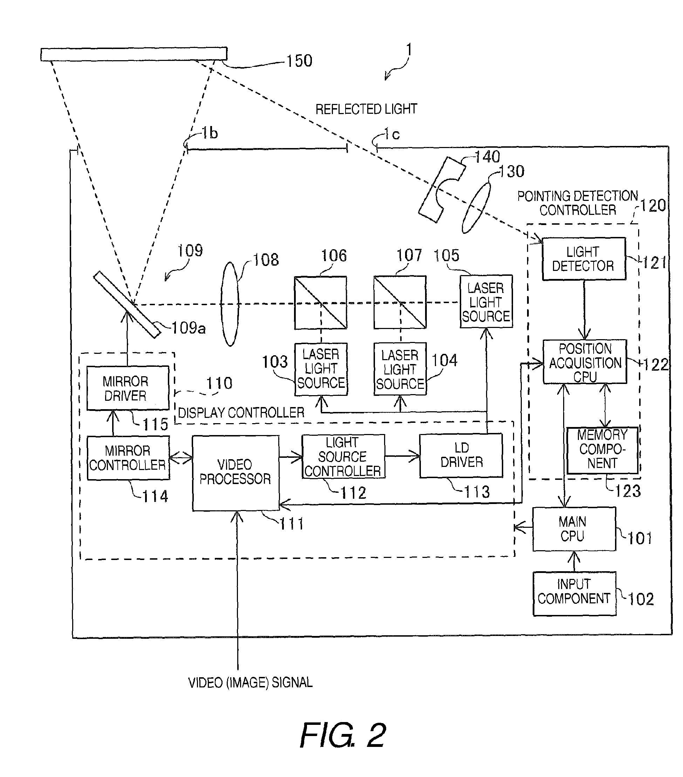

As shown in FIG. 2, the projector 1 includes a main CPU 101, an input component 102, three laser light sources 103 to 105 (three colors: blue, green, and red), two polarized beam splitters 106 and 107, a lens 108, a laser light scanner 109, a display controller 110, and a pointing detection controller 120. The pointing detection controller 120 includes a light detector 121, etc. Also, the image 150b projected onto the projection surface 150a is formed by the laser light sources 103 to 105. The laser light scanner 109 includes a MEMS (micro electro-mechanical system) mirror 109a. The laser light scanner 109 is configured so that a laser beam (e.g., light) is scanned over the projection surface 150a (see FIG. 1). A prism 140 is disposed more to the projection surface 150a side (the X1 direction side) than the light detector 121, and a converging lens 130 is disposed between the prism 140 and the light detector 121. The pointing detection controller 120 is configured to detect the touch position of the detection object 160 (that a specific coordinate has been touched). The prism 140 is an example of the "lens member" and the "light guide member" of the present invention. The laser light scanner 109 is an example of the "light scanner" of the present invention.

The main CPU 101 is configured to control the various components of the projector 1. The input component 102 is configured to accept input from the user (such as input to change the resolution of the projected image). The laser light source 103 is configured so that blue laser light is transmitted by the polarized beam splitter 106 and the lens 108 and shines on the MEMS mirror 109a. The laser light sources 104 and 105 are respectively configured so that green laser light and red laser light are transmitted by the polarized beam splitters 107 and 106 and the lens 108 and shine on the MEMS mirror 109a.

The laser light scanner 109 is configured so as to project the laser light onto the projection surface 150a. More specifically, the MEMS mirror 109a of the laser light scanner 109 scans the laser light emitted from the laser light sources 103 to 105, so that the image 150b is projected onto the projection surface 150a. As shown in FIG. 1, the MEMS mirror 109a is configured to scan the laser light by being driven biaxially, in the horizontal direction (Y direction) and the vertical direction (X direction). Also, the MEMS mirror 109a is configured to scan at high speed in the horizontal direction by resonance drive, and to scan at low speed in the vertical direction by direct current drive.

The display controller 110 includes a video processor 111, a light source controller 112, an LD (laser diode) driver 113, a mirror controller 114, and a mirror driver 115. The projector 1 is configured to output the image 150b based on a video signal inputted to the video processor 111.

The video processor 111 is configured to control the projection of video based on a video signal inputted from the outside. More specifically, the video processor 111 is configured so that the drive of the MEMS mirror 109a is controlled via the mirror controller 114 based on the video signal inputted from the outside, and the emission of laser light by the laser light sources 103 to 105 is controlled via the light source controller 112.

The light source controller 112 is configured to control the LD driver 113 based on control by the video processor 111, and to control the emission of laser light by the laser light sources 103 to 105. More specifically, the light source controller 112 is configured to control the emission of laser light from the laser light sources 103 to 105 in colors corresponding to the various pixels of the image 150b, matched to the timing at which the MEMS mirror 109a scans.

The mirror controller 114 is configured to control the mirror driver 115 based on control by the video processor 111, and thereby controlling the drive of the MEMS mirror 109a.

The pointing detection controller 120 includes the light detector 121, a position acquisition CPU 122, and a memory component 123.

The light detector 121 is configured to detect the laser light (e.g., the reflected light) that has been scanned by the laser light scanner 109 and reflected by the detection object 160. The light detector 121 will be discussed in detail below.

The position acquisition CPU 122 is configured to acquire the touch position of the detection object 160 with respect to the projection surface 150a based on the light reflected by the detection object 160 and detected by the light detector 121 (a specific position on the projection surface 150a is determined to have been touched).

The position acquisition CPU 122 is configured to acquire the position of the detection object 160 based on the scanning path of the laser light and information about the time when the light detector 121 detected the reflected laser light. More specifically, the position acquisition CPU 122 determines the position (coordinates) scanned by the detected laser light based on the scanning path of the laser light and the elapsed time from when a horizontal synchronization signal was inputted until the laser light is detected, and thereby acquiring the position (coordinates) of the detection object 160 corresponding to the image 150b. That is, the position acquisition CPU 122 calculates the coordinates of the detection object 160 on the projection surface 150a based on the scanning position produced by the laser light scanner 109 and the timing at which the laser light reflected from the detection object 160 is detected by the light detector 121. This calculation of the coordinates of the detection object 160 can be a conventional method well-known in the art. Thus, detailed descriptions of the calculation will be omitted for the sake of brevity.

The memory component 123 stores, for example, data used for computing the touch position of the detection object 160 based on the laser light reflected by the detection object 160 and detected by the light detector 121.

In the illustrated embodiment, the man CPU 101, the display controller 110, and the pointing detection controller 120 can be formed by a single microcomputer or separate microcomputers, respectively. The man CPU 101, the display controller 110, and the pointing detection controller 120 each can also include other conventional components such as an input interface circuit, an output interface circuit, and storage devices such as a ROM (Read Only Memory) device and a RAM (Random Access Memory) device. The microcomputer or microcomputers are programmed to control the various component of the projector 1. The memory circuit stores processing results and control programs. Specifically, the internal RAM stores statuses of operational flags and various control data. The internal ROM stores the control program for various operations. The microcomputer or microcomputers are capable of selectively controlling any of the components of the projector 1 according to the control program. It will be apparent to those skilled in the art from this disclosure that the precise structure and algorithms can be any combination of hardware and software that will carry out the functions of the present invention.

Next, the configuration of the light detector 121 will be described in detail.

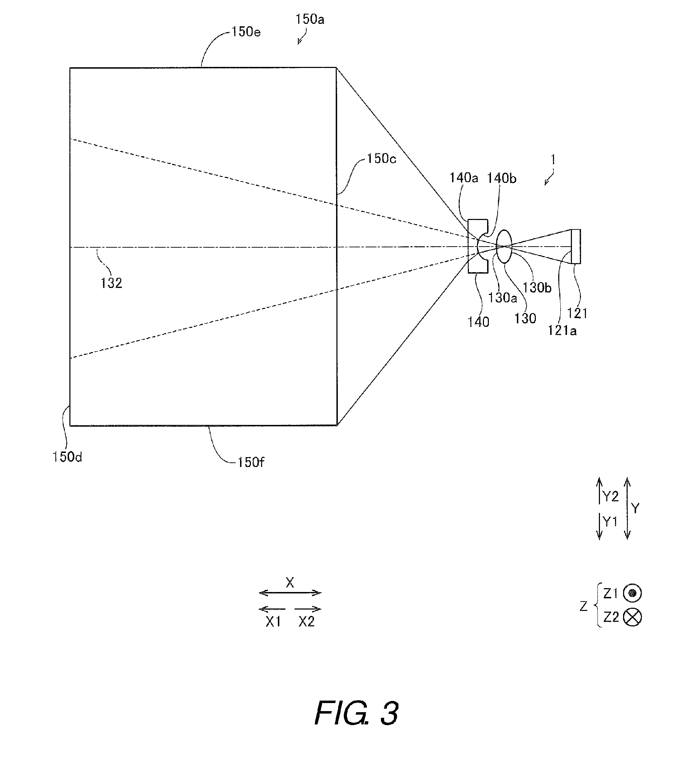

In the first embodiment, the light detector 121 includes a photodiode. As shown in FIG. 3, the light detector 121 includes a light detection face 121a where the light (e.g., the reflected light) is detected. The light detector 121 is substantially cuboid in shape, being wider than it is tall, and extending in the direction (the Y direction) in which the side 150c of the projection surface 150a that is opposite the projector 1 extends. The light detector 121 is disposed on the opposite side from the projection surface 150a side (the X2 direction side) with respect to the converging lens 130. The side 150c is the side of the projection surface 150a closest to the light detector 121, of the two sides facing the light detector 121.

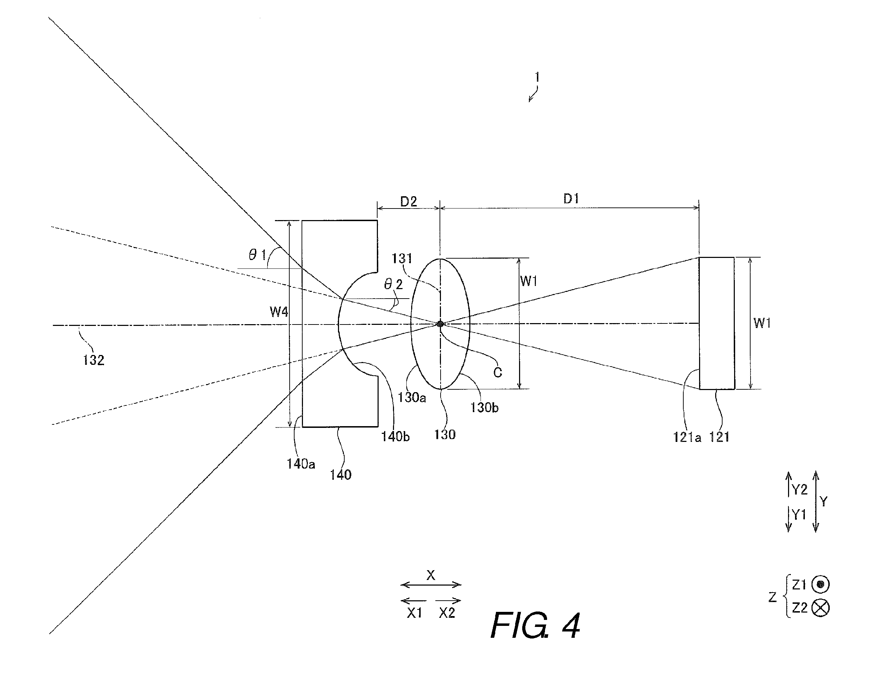

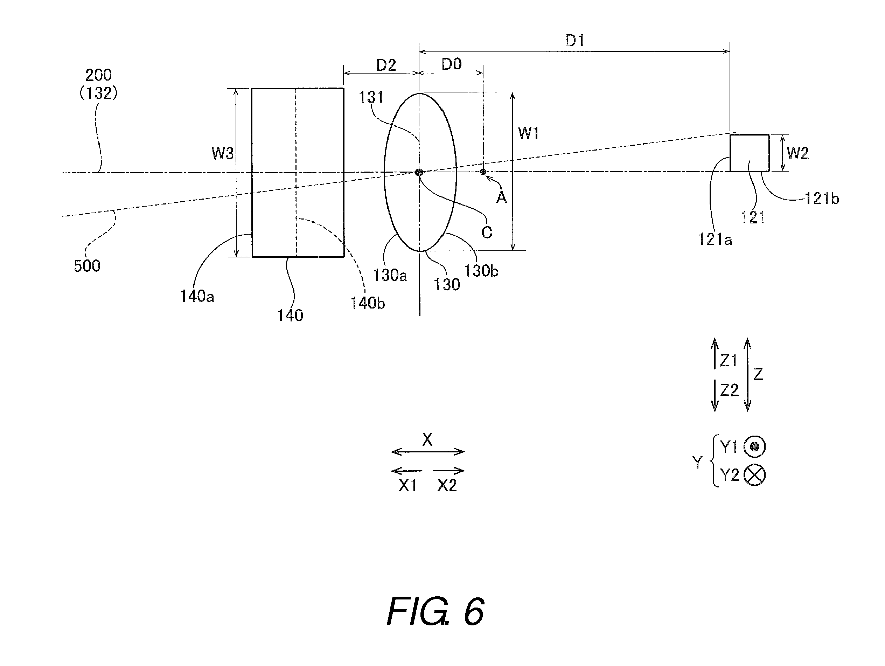

As shown in FIG. 4, the light detection face 121a of the light detector 121 is disposed a distance D1 away from the principal plane 131 of the converging lens 130. The light detector 121 has a width W1 in the direction (e.g., the widthwise direction) parallel to the side 150c of the projection surface 150a (Y direction). Also, the light detector 121 is disposed separated from the converging lens 130 by the distance D1, which is greater than the width (length or height) W2 of the light detector 121 (see FIG. 6) in the direction (e.g., the height direction) perpendicular to the projection surface 150a (Z direction). In other words, the light detector 121 has the width W1 in the widthwise direction that is larger than the height W2 in the height direction. The light detector 121 is disposed separated from the converging lens 130 by the distance D1, which is greater than the distance D2 between the principal plane 131 of the converging lens 130 and the prism 140 (e.g., the closest portion of the prism 140 to the principal plane 130). Thus, in the illustrated embodiment, the light detector 121 is spaced away from the converging lens 130 by the distance D1 that is greater than the width W2 (e.g., the dimension) of the light detector 121 in the direction (e.g., the height direction) perpendicular to the projection surface 150a. Also, in the illustrated embodiment, the prism 140 (e.g., the light guide member or the lens member) is disposed on the opposite side of the light detector 121 relative to the converging lens 130. The light detector 121 is spaced away from the converging lens 130 by the distance D1 that is greater than the distance D2 between the converging lens 130 and the prism 140 (e.g., the lens member).

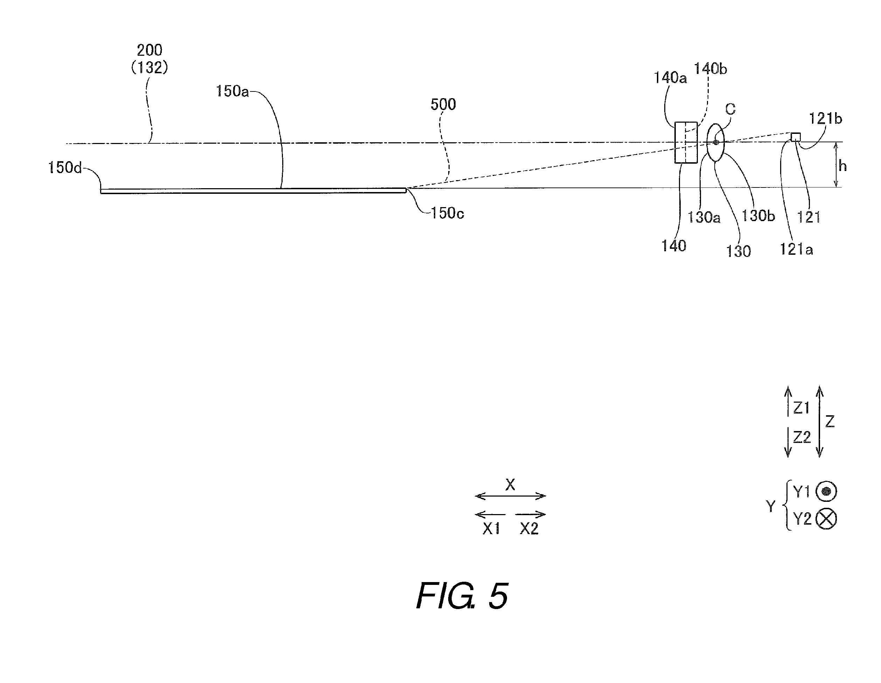

As shown in FIG. 5, the light detector 121 is provided so that its lower face 121b substantially overlaps a detection reference position 200 that is separated from the projection surface 150a by a specific height h. Also, the light detector 121 is included at the position of a region (disposition region) between a straight line corresponding to the detection reference position 200 and a straight line 500 (plane) that links the center C (or principal point) of the converging lens 130 and the side 150c of the projection surface 150a in the direction perpendicular to the projection surface 150a (Z direction). Also, the light detector 121 is configured so as to detect the laser light reflected by the detection object 160 that is inserted into a detection range that is more to the projection surface 150a side (Z2 direction side) than the detection reference position 200. More precisely, the detection range is the range between the projection surface 150a and the detection reference position 200, and is the range illuminated by the light forming the image projected from the projector 1. Consequently, only reflected light from the detection range is detected by the light detector 121, so only the detection object 160 inserted into the detection range is detected. As a result, it will be determined (recognized) that a specific position on the projection surface 150a has been touched only when something has been inserted into the detection range. The detection reference position 200 overlaps or is aligned to the optical axis 132 of the converging lens 130 as viewed from the side face of the projector 1 (Y direction side). In other words, as shown in FIG. 5, the light detector 121 can be arranged such that the lower face 121b is aligned to the optical axis 132 of the converging lens 130 in the direction perpendicular to the projection surface 150a (Z direction), and the light detector 121 is disposed above the optical axis 132 of the converging lens 130 in the direction perpendicular to the projection surface 150a.

Also, as shown in FIG. 6, it is conceivable that the light detector 121 will be disposed at position A, which is separated from the principal plane 131 of the converging lens 130 by a short distance (such as a distance D0 that is one-fifth the distance D1). In this case, the variance in the height of the touch position (deviation in the height of the detection reference position 200) at a specific position of the projection surface 150a corresponding to positional deviation of a specific amount G0 between the light detector 121 and the converging lens 130 in the direction perpendicular to the projection surface 150a (Z direction) will be G. In contrast, if the light detector 121 is disposed at a position that is separated by the distance D1 from the principal plane 131 of the converging lens 130 as in the first embodiment, the variance in the height of the touch position at a specific position of the projection surface 150a with respect to the positional deviation of the specific amount G0 between the light detector 121 and the converging lens 130 in the Z direction is 1/5G. That is, the acceptable amount of the variance in the height of the touch position at a specific position of the projection surface 150a can be set to five times by increasing the distance between the converging lens 130 (the principal plane 131) and the light detector 121 by five times. This makes it possible to moderate the accuracy of positioning of the light detector 121 in the height direction.

As shown in FIG. 3, the converging lens 130 is a convex lens. The converging lens 130 is configured so that the light within the convergence range, out of the light reflected by the detection object 160, will be converged so as to be guided to the light detector 121. The convergence range of the converging lens 130 in the first embodiment is the range flanked by the dotted lines. Also, the converging lens 130 has the width or height W1 (see FIG. 6) in the direction perpendicular to the projection surface 150a (Z direction). In other words, the converging lens 130 has the height W1 that is equal to the width W1. Also, the height W1 and the width W1 of the converging lens 130 are equal to the width W1 of the light detector 121. As shown in FIG. 4, the converging lens 130 has the width W1 in the direction parallel to the side 150c of the projection surface 150a (Y direction). The converging lens 130 is disposed so that a lens face 130a on the projection surface 150a side is opposite a light emission face 140b of the prism 140. The converging lens 130 is also disposed so that a lens face 130b on the opposite side from the projection surface 150a side is opposite the light detection face 121a of the light detector 121. Thus, in the illustrated embodiment, the converging lens 130 is disposed between the projection surface 150a and the light detector 121 to guide the light (e.g., the reflected light) within the convergence range of the converging lens 130 to the light detector 121. In other words, in the illustrated embodiment, as shown in FIGS. 3 to 6, the light (e.g., the reflected light) within the convergence range of the converging lens 130 is directly guided to the light detector 121 through the converging lens 130.

In the first embodiment, the prism 140 is disposed on the opposite side of the converging lens 130 from the light detector 121 (on the X1 direction side). The prism 140 has a width W4 in the direction parallel to the side 150c of the projection surface 150a (Y direction). In the illustrated embodiment, as shown in FIG. 4, the width W4 of the prism 140 in the widthwise direction is greater than the width W1 of the converging lens 130. The prism 140 also has a height W3 (see FIG. 6) in the direction perpendicular to the projection surface 150a (Z direction). In the illustrated embodiment, as shown in FIG. 6, the height W3 of the prism 140 in the height direction is greater than the width or height W1 of the converging lens 130. The prism 140 is formed such that a light incidence face 140a on the projection surface 150a side (the X1 direction side) is substantially flat. Also, the prism 140 is formed such that the light emission face 140b on the light detector 121 side (the X2 direction side) is a concave curved surface. The light emission face 140b has a substantially semicircular shape when viewed in the direction perpendicular to the projection surface 150a, as shown in FIG. 4. The light emission face 140b is also formed so that the curvature in the Z direction is substantially zero, as shown in FIG. 6.

The prism 140 is configured so that a light component exceeding the convergence range of the converging lens 130 in the direction parallel to the projection surface 150a (X-Y plane) in plan view, out of the light reflected by the detection object 160 (hereinafter referred to as the parallel light component) will be refracted and guided to the light detector 121. More precisely, the prism 140 is configured so that the incidence angle θ1 at which the parallel light component is incident on the prism 140 will be greater than the emission angle θ2 when light is emitted from the prism 140. In other words, the prism 140 is configured so that the parallel light component exceeding the convergence range of the converging lens 130 will be incident at the specific incidence angle θ1, and will be emitted toward the converging lens 130 at the emission angle θ2, which is less than the incidence angle θ1. Thus, in the illustrated embodiment, as shown in FIGS. 3 and 4, the prism 140 (e.g., the light guide member) is configured to refract at least the light (e.g., the reflected light) outside the convergence range of the converging lens 130 in the direction (e.g., the widthwise direction) parallel to the projection surface 150a in plan view such that the light (e.g., the reflected light) within the detection range of the projector 1 that is wider than the convergence range in the direction (e.g., the widthwise direction) parallel to the projection surface 150a is guided to the light detector 121. Also, as shown in FIGS. 5 and 6, the prism 140 (e.g., the light guide member) is configured such that at least the light (e.g., the reflected light) outside the convergence range of the converging lens 130 in the direction (e.g., the height direction) perpendicular to the projection surface 150a is not guided to the light detector 121 to define the detection range of the projector 1 in the direction (e.g., the height direction) perpendicular to the projection surface 150a. Also, in the illustrated embodiment, the light guide member includes the lens member that is configured to refract the light (e.g., the reflected light). Specifically, in the illustrated embodiment, the light guide member includes the lens member that is made of the prism 140. The prism 140 is configured such that when the light (e.g., the reflected light) outside the convergence range of the converging lens 130 in the direction (e.g., the widthwise direction) parallel to the projection surface 150a is incident at the specific incidence angle θ1 relative to the optical axis 132 of the converging lens 130, the light (e.g., the reflected light) is emitted toward the converging lens 130 at the emission angle θ2 relative to the optical axis 132 of the converging lens 130 that is smaller than the incidence angle θ1.

Also, the prism 140 is configured so that the greater is the distance between the detection object 160 and the optical axis 132 of the converging lens 130 in plan view, the greater is the refractive index (refraction rate) of the light reflected by the detection object 160. That is, the prism 140 is configured so that the light reflected by the detection object 160 is refracted more as the position of the detection detection object 160 is closer to the sides 150e and 150f (see FIG. 3) perpendicular to the side 150c of the projection surface 150a. Also, the prism 140 is configured so that the parallel light component within the convergence range of the converging lens 130 in plan view, out of the light reflected by the detection object 160, is guided to the light detector 121 without being refracted.

Because of the above, the prism 140 can make the light that is not incident on the light detector 121 (the light detection face 121a), even though it would have been reflected by the detection object 160 outside the convergence range if there were no prism 140, be incident on the light detector 121. As a result, providing the prism 140 allows the detection range of the parallel light component to be expanded.

As shown in FIG. 5, the prism 140 is configured so that when viewed in the direction parallel to the projection surface 150a (Y direction), out of the light reflected by the detection object 160, the light component in the direction perpendicular to the projection surface 150a (hereinafter referred to as the perpendicular light component) will be guided to the light detector 121 without being refracted. Also, the prism 140 is configured so that the perpendicular light component reflected by the detection object 160 in a range more to the opposite side from the projection surface 150a (the Z1 direction side) than the detection range (a range that is outside the convergence range of the converging lens 130) when viewed from the side face side (the Y direction side) of the projector 1, out of the light reflected by the detection object 160, will not be guided to the light detector 121. Consequently, the detection range of light can be maintained in the direction perpendicular to the projection surface 150a, and only laser light reflected by the detection object 160 in the detection range will be detected by the light detector 121.

The following effects can be obtained with the first embodiment above.

In the first embodiment, as discussed above, the prism 140 is provided to expand the detection range of the light component in the direction parallel to the projection surface 150a by refracting the light component in the direction parallel to the projection surface 150a exceeding the convergence range of the converging lens 130 in plan view, out of the light reflected by the detection object 160, and guiding it to the light detector 121. Consequently, even though the light detector 121 is disposed away from the converging lens 130, the light that has been reflected by the detection object 160 and passed through the converging lens 130 can be guided by the prism 140 to the light detector 121 before spreading out very much. As a result, even though the light detector 121 is separated from the converging lens 130, it will be less likely that the detection range of the light component parallel to the projection surface 150a will be smaller than the width of the projection surface 150a. Therefore, unlike when the converging lens 130 and the light detector 121 are disposed close to each other, it will be less likely that there will be an increase in variance in the height of touch detection with respect to positional deviation between the converging lens 130 and the light detector 121 in the direction perpendicular to the projection surface 150a. Because of the above, it will be less likely that the detection range of the light component in the direction parallel to the projection surface 150a will be smaller than the width of the projection surface 150a, while accuracy in positioning of the light detector 121 in the height direction can be moderated.

Also, in the first embodiment, as discussed above, the prism 140 is configured so that at least the light component in the direction perpendicular to the projection surface 150a exceeding the convergence range of the converging lens 130, out of the light reflected by the detection object 160, is not guided to the light detector 121, thereby maintaining the detection range of the light component in the direction perpendicular to the projection surface 150a. Consequently, just the detection range of the light component parallel to the projection surface 150a can be expanded, without expanding the detection range of the light component perpendicular to the projection surface 150a, so just light reflected by the detection object 160 near the projection surface 150a and below the detection reference position 200 can be accurately guided to the light detector 121. As a result, accuracy in positioning of the light detector 121 in the height direction can be moderated, while making false detection of a touch on the projection surface 150a less likely.

Also, in the first embodiment, as discussed above, the light detector 121 is disposed away from the converging lens 130, separated by a distance that is greater than the length of the light detector 121 in the direction perpendicular to the projection surface 150a. Consequently, separating the converging lens 130 from the light detector 121 allows the layout region including the position where the light detector 121 is disposed to be made larger in the direction perpendicular to the projection surface 150a of the projector 1. Thus separating the light detector 121 from the converging lens 130 effectively suppresses an increase in variance in the height of touch detection with respect to positional deviation between the converging lens 130 and the light detector 121 in the direction perpendicular to the projection surface 150a.

Also, in the first embodiment, as discussed above, the prism 140 is disposed on the opposite side of the converging lens 130 from the light detector 121, and the light detector 121 is disposed away from the converging lens 130, separated by a distance that is greater than the distance between the converging lens 130 and the prism 140. Consequently, the light detector 121 is separated from the converging lens 130, and an increase in variance in the height of touch detection with respect to positional deviation between the converging lens 130 and the light detector 121 in the direction perpendicular to the projection surface 150a can be easily suppressed.

Also, in the first embodiment, as discussed above, the prism 140 is configured so that the light in the direction parallel to the projection surface 150a that exceeds the convergence range of the converging lens 130 will be incident at a specific incidence angle, and will be emitted toward the converging lens 130 at an emission angle that is smaller than the incidence angle. Consequently, even though the light detector 121 is disposed away from the converging lens 130, the light that has been reflected by the detection object 160 and passed through the converging lens 130 can be focused. Thus, the light that has been reflected by the detection object 160 and passed through the converging lens 130 can be reliably guided to the light detector 121 by the prism 140 before spreading out very much.

### SECOND EMBODIMENT

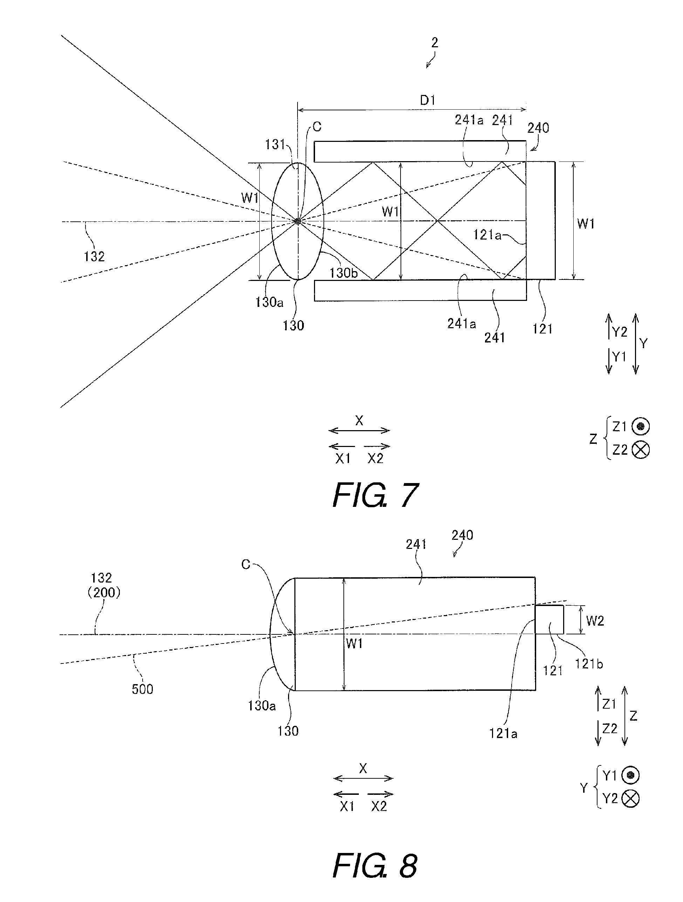

Referring now to FIGS. 7 and 8, a projector 2 in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

In the first embodiment, the prism 140 is disposed on the projection surface 150a side of the converging lens 130. In the second embodiment, with the projector 2, a light guide member 240 is disposed to the side of the region between the converging lens 130 and the light detector 121 along the optical axis 132 of the converging lens 130. In the following description, members that are numbered the same as in the first embodiment above and shown in FIG. 2 are the same as in the first embodiment above, and therefore will not be described again.

As shown in FIG. 7, the light guide member 240 of the projector 2 in accordance with the second embodiment includes a pair of mirror members 241 that refract and reflect light. The mirror members 241 each include a reflective face 241a. Also, the mirror members 241 are disposed in the region between the converging lens 130 and the light detector 121, and to the sides in the direction in which the side 150c of the projection surface 150a extends (the Y direction). Also, the mirror members 241 are disposed so as to be opposite each other in the direction substantially parallel to the projection surface 150a (the Y direction). Also, the reflective faces 241a of the mirror members 241 are disposed so as to be opposite each other, separated by a spacing W1. In other words, the mirror members 241 have the spacing W1 therebetween that is equal to the width W1 of the light detector 121. The mirror members 241 are an example of the "light guide member" of the present invention.

As shown in FIG. 8, the mirror members 241 are formed in substantially the same shape. More specifically, the mirror members 241 have a substantially rectangular shape when viewed from the side face side (the Y direction side) of the projector 1. Also, the mirror members 241 have a width W1 in the direction perpendicular to the projection surface 150a (the Z direction). Thus, the width W1 of the mirror members 241 is equal to the width W1 of the light detector 121. As shown in FIG. 7, the light detector 121 is disposed so as to be flanked by the mirror members 241 (the reflective faces 241a) in plan view (when viewed from the Z1 direction side). This makes it possible for light reflected by the mirror members 241 to be incident on the light detector 121 (the light detection face 121a). As a result, the light component in the direction parallel to the projection surface 150a (X-Y plane) and reflected by the detection object 160 at a position that exceeds the convergence range of the converging lens 130 (outside the convergence range) can be reflected by the mirror members 241 and guided to the light detector 121. Thus, in the illustrated embodiment, the light guide member includes the pair of the mirror members 241 that is disposed opposite relative to each other in the direction (e.g., the widthwise direction) parallel to the projection surface 150a and is disposed between the converging lens 130 and the light detector 121 along the optical axis 132 of the converging lens 130. The mirror members 241 are configured to reflect the light (e.g., the reflected light) outside the convergence range of the converging lens 130 in the direction (e.g., the widthwise direction) therebetween to guide the light (e.g., the reflected light) to the light detector 121. Also, the the mirror members 241 do not change the direction of the light (e.g., reflected light) in the direction (e.g., the height direction) perpendicular to the projection surface 150a.

The rest of the configuration of the second embodiment is the same as in the first embodiment above.

The following effects can be obtained with the second embodiment above.

In the second embodiment, as discussed above, the light guide member 240 is provided to expand the detection range of the parallel light component with respect to the projection surface 150a by reflecting at least the parallel light component with respect to the projection surface 150a exceeding the convergence range of the converging lens 130 in plan view, out of the light reflected by the detection object 160, and guiding it to the light detector 121. Consequently, even though the light detector 121 is disposed away from the converging lens 130 (Distance D1), the light that has been reflected by the detection object 160 and passed through the converging lens 130 can be guided by the light guide member 240 (the mirror members 241) to the light detector 121 before spreading out very much. As a result, even though the light detector 121 is separated from the converging lens 130, it will be less likely that the detection range of the light component parallel to the projection surface 150a will be smaller than the width of the projection surface 150a. Therefore, unlike when the converging lens 130 and the light detector 121 are disposed close to each other, it will be less likely that there will be an increase in variance in the height of touch detection with respect to positional deviation between the converging lens 130 and the light detector 121 in the direction perpendicular to the projection surface 150a. Because of the above, it will be less likely that the detection range of the light component in the direction parallel to the projection surface 150a will be smaller than the width of the projection surface 150a, while accuracy in positioning of the light detector 121 in the height direction can be moderated.

Also, in the second embodiment, as discussed above, the light guide member 240 is formed by the pair of mirror members 241. The mirror members 241 are disposed between the converging lens 130 and the light detector 121 and opposite each other in the direction substantially parallel to the projection surface 150a. The mirror member 241 also reflect light in the direction parallel to the projection surface 150a exceeding the convergence range of the converging lens 130, and guide it to the light detector 121. Consequently, even though the light detector 121 is disposed away from the converging lens 130, the light that has been reflected by the detection object 160 and passed through the converging lens 130 can be guided to the light detector 121 while being turned back by the pair of mirror members 241. Also, unlike when a lens member such as a prism whose refractive index or the like has been optimized is provided in order to guide light to the light detector 121 in a direction parallel to the projection surface 150a exceeding the convergence range of the converging lens 130, even though the light detector 121 is separated from the converging lens 130, it will be less likely that the detection range of the light component in the direction parallel to the projection surface 150a will be smaller than the width of the projection surface 150a, and this can be accomplished by a simple configuration.

The other effects of the second embodiment are the same as those listed for the first embodiment above.

### THIRD EMBODIMENT

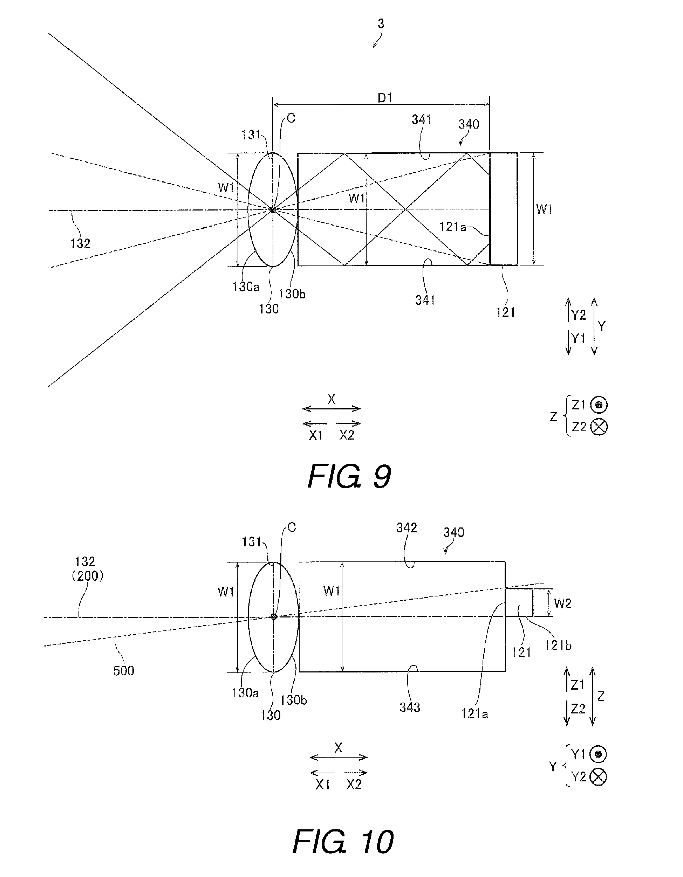

Referring now to FIGS. 9 and 10, a projector 3 in accordance with a third embodiment will now be explained. In view of the similarity between the first and third embodiments, the parts of the third embodiment that are identical to the parts of the first embodiment will be given the same reference numerals as the parts of the first embodiment. Moreover, the descriptions of the parts of the third embodiment that are identical to the parts of the first embodiment may be omitted for the sake of brevity.

In the first embodiment, the prism 140 is disposed on the projection surface 150a side of the converging lens 130. In the third embodiment, with the projector 3, a low reflection-processed prism 340 that has undergone low reflection-processing is disposed between the converging lens 130 and the light detector 121 along the optical axis 132 of the converging lens 130. The low reflection-processed prism 340 is an example of the "light guide member" of the present invention. In the following description, members that are numbered the same as in the first embodiment above and shown in FIG. 2 are the same as in the first embodiment above, and therefore will not be described again.

As shown in FIG. 9, the low reflection-processed prism 340 of the projector 3 in accordance with the third embodiment is configured so as to reflect light that is incident in the interior. The low reflection-processed prism 340 is disposed between the converging lens 130 and the light detector 121. Also, the low reflection-processed prism 340 is formed in a substantially cuboid shape (not shown). Also, the low reflection-processed prism 340 is configured so that light is reflected by a pair of side faces 341 in the interior and in the direction in which the side 150c (see FIG. 1) of the projection surface 150a extends (the Y direction). Also, the low reflection-processed prism 340 is configured to refract (reflect) the light component in the direction parallel to the projection surface 150a (X-Y plane) exceeding the convergence range of the converging lens 130 (parallel light component). Consequently, the parallel light component reflected by the low reflection-processed prism 340 is guided to the light detector 121. As a result, it is possible for light reflected by the low reflection-processed prism 340 to be incident on the light detector 121 (the light detection face 121a) without leaking out.

Also, the low reflection-processed prism 340 has the width W1 in the direction parallel to the side 150c (see FIG. 1) of the projection surface 150a (Y direction). Also, the low reflection-processed prism 340 has the width W1 (see FIG. 10) in the direction perpendicular to the projection surface 150a (Z direction). Thus, the widths of the low reflection-processed prism 340 are equal to the width W1 of the light detector 121. Also, the low reflection-processed prism 340 is disposed in close contact with the light detection face 121a of the light detector 121.

Also, the low reflection-processed prism 340 is subjected to processing that lowers its reflectivity to the light (perpendicular light component) in the direction perpendicular to the projection surface 150a (Z direction side) exceeding the convergence range of the converging lens 130. More specifically, as shown in FIG. 10, the faces 342 and 343 of the low reflection-processed prism 340 on the Z direction sides (the upper face 342 and the lower face 343) are subjected to sandblasting to lower the reflectivity (diffusivity) of light. Consequently, even if the perpendicular light component reflected by the detection object 160 outside the detection range above (in the Z1 direction) the detection reference position 200 should end up being incident on the low reflection-processed prism 340, any of the perpendicular light component unintentionally incident on the low reflection-processed prism 340 can be absorbed by the upper face 342 and the lower face 343 (or transmitted by the upper face 342 and the lower face 343). As a result, false detection of a touch on the projection surface 150a is less likely. Thus, in the illustrated embodiment, the light guide member includes the low reflection-processed prism 340 that is disposed between the converging lens 130 and the light detector 121 along the optical axis 132 of the converging lens 130. The low reflection-processed prism 340 has the upper and lower faces 342 and 343 (e.g., the processed portions) with the lower reflectivity than the side faces 341 (e.g., the portions other than the processed portions) with respect to the light (e.g., the reflected light) outside the convergence range of the converging lens 130 in the direction (e.g., the height direction) perpendicular to the projection surface 150a. The side faces 341 (e.g., the portions other than the processed portions) refract or totally reflect (i.e., total reflection) the light (e.g., the reflected light) outside the convergence range of the converging lens 130 in the direction (e.g., the widthwise direction) parallel to the projection surface 150a.

The rest of the configuration of the third embodiment is the same as in the first embodiment above.

The following effects can be obtained with the third embodiment above.

In the third embodiment, as discussed above, the low reflection-processed prism 340 is provided to expand the detection range of the light component in the direction parallel to the projection surface 150a by reflecting at least the light component in the direction parallel to the projection surface 150a exceeding the convergence range of the converging lens 130 in plan view, out of the light reflected by the detection object 160, and guiding it to the light detector 121. Even though the light detector 121 is disposed away from the converging lens 130, the light that has been reflected by the detection object 160 and passed through the converging lens 130 can be guided by the low reflection-processed prism 340 to the light detector 121 before spreading out very much. Consequently, even though the light detector 121 is separated from the converging lens 130, it is less likely that the detection range of the light component in the direction parallel to the projection surface 150a will be smaller than the width of the projection surface 150a. As a result, unlike when the converging lens 130 and the light detector 121 are disposed close to each other, it will be less likely that there will be an increase in variance in the height of touch detection (deviation in the height of the detection object 160) with respect to positional deviation between the converging lens 130 and the light detector 121 in the direction perpendicular to the projection surface 150a. Therefore, it will be less likely that the detection range of the light component in the direction parallel to the projection surface 150a will be smaller than the width of the projection surface 150a, while accuracy in positioning of the light detector 121 in the height direction can be moderated.

Also, with the third embodiment, as discussed above, the light guide member is formed by the low reflection-processed prism 340, which is disposed between the converging lens 130 and the light detector 121 and has undergone processing to lower its reflectivity to the light component in the direction perpendicular to the projection surface 150a exceeding the convergence range of the converging lens 130, while refracting the light component in the direction parallel to the projection surface 150a exceeding the convergence range of the converging lens 130. Consequently, even if the light component in the perpendicular direction reflected by the detection object 160 outside the detection range above the detection reference position 200 should be incident on the low reflection-processed prism 340, this incident light will be less likely to be guided to the light detector 121. As a result, accuracy in positioning in the height direction of the light detector 121 can be moderated, while making false detection of a touch on the projection surface 150a less likely.

The other effects of the third embodiment are the same as those listed for the first embodiment above.

The embodiments disclosed herein are just examples in every respect, and should not be considered to be limiting in nature. The scope of the present invention is indicated by the appended claims and not by the description of the embodiments given above, and furthermore it encompasses all modifications within the equivalent meaning and scope of the claims.

For instance, in the first embodiment above, the prism (e.g., the light guide member) is provided that guides the light within the convergence range of the converging lens to the light detector without refracting the light. However, the present invention is not limited to this. In the present invention, a light guide member can be provided that refracts the light within the convergence range, and guides it to the light detector.

In the first embodiment above, the light guide member includes the prism. However, the present invention is not limited to this. In the present invention, the light guide member can be a lens or the like instead of the prism.

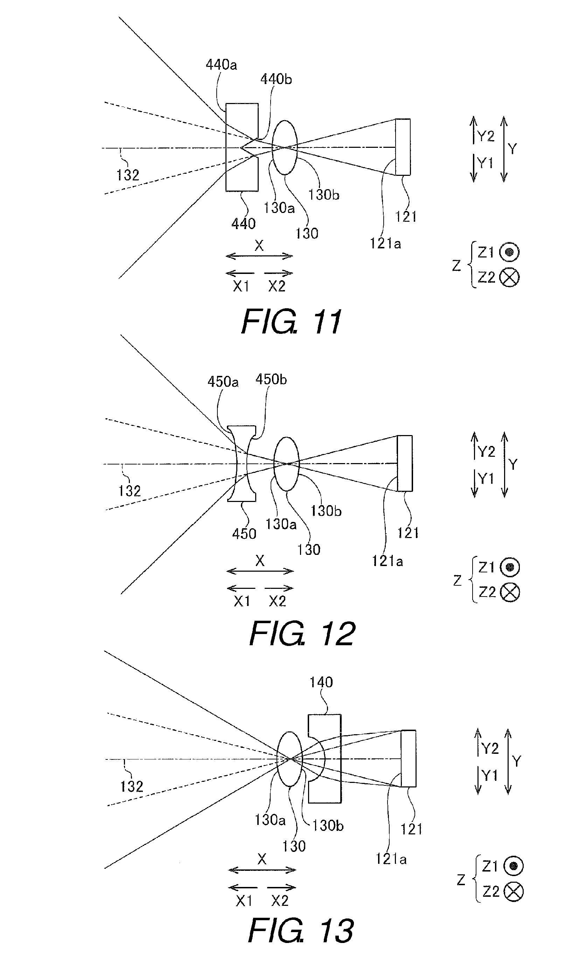

In the first embodiment above, the prism 140 (e.g., the light guide member) is provided in which the light emission face 140b on the light detector 121 side is formed as a concave curved surface and the light incident face 140a on the projection surface 150a side is substantially flat in plan view (as seen from the Z direction side). However, the present invention is not limited to this. In the present invention, as in the first modification example shown in FIG. 11, the light guide member 440 can be such that a light incident face 440a on the projection surface 150a side is substantially flat and a light emission face 440b on the light detector 121 side is formed as a V-shaped concave surface. Also, as in the second modification example shown in FIG. 12, the light guide member 450 can be such that a light emission face 450b on the light detector 121 side and a light incident face 450a on the projection surface 150a side are both formed as concave curved surfaces. Also, the light guide members 440 and 450 are also configured such that the light guide members 440 and 450 has the curvature in the Z direction is substantially zero, as the prism 140 in accordance with the first embodiment.

In the first embodiment above, the prism 140 (e.g., the light guide member) is disposed on the projection surface 150a side of the converging lens 130. However, the present invention is not limited to this. In the present invention, as in the third modification example shown in FIG. 13, the prism 140 (e.g., the light guide member) can be disposed on the light detector 121 side of the converging lens 130.

In the second embodiment above, the spacing W1 between the pair of the mirror members 241 is uniform along the optical axis 132 of the converging lens 130, as shown in FIG. 7. However, the present invention is not limited to this. In the present invention, the spacing between the pair of the mirror members 241 (e.g., the light guide members) can gradually narrow toward the light detector 121 along the optical axis 132. This allows the light reflected by the mirror members 241 to be more reliably guided to the light detector 121.

In the third embodiment above, the low reflection-processed prism 340 (e.g., the light guide member) is provided in which the lower face 343 (the face on the projection surface 150a side) and the upper face 342 (the face on the opposite side from the projection surface 150a) has been subjected to sandblasting to lower the reflectivity. However, the present invention is not limited to this. In the present invention, the light guide member can be provided in which the upper and lower faces 342 and 343 have undergone processing other than sandblasting to lower their reflectivity.

The projector in accordance with one aspect of the invention includes comprises a light scanner, a light detector, a converging lens, and a light guide member. The light scanner is configured to scan light over a projection surface. The light detector is configured to detect reflected light of the light that has been reflected by a detection object. The converging lens is disposed between the projection surface and the light detector to guide the reflected light within a convergence range of the converging lens to the light detector. The light guide member is configured to refract or reflect at least the reflected light outside the convergence range of the converging lens in a widthwise direction parallel to the projection surface in plan view such that the reflected light within a detection range of the projector that is wider than the convergence range in the widthwise direction is guided to the light detector.

With the projector in accordance with the above aspect, the light guide member refracts or reflects at least a light component that exceeds the convergence range of the converging lens in the widthwise direction parallel to the projection surface in plan view, out of the reflected light reflected by the detection object, and guides this reflected light to the light detector. Thus, even though the light detector is spaced away from the converging lens, the reflected light that has been reflected by the detection object and passed through the converging lens can be guided by the light guide member to the light detector before spreading out. Consequently, even though the light detector is apart from the converging lens, it will be less likely that the detection range of the light component in the widthwise direction parallel to the projection surface becomes smaller than the width of the projection surface. As a result, unlike when the converging lens and the light detector are disposed close to each other, it will be suppressed for an amount of variance in the height of touch detection (deviation in the height of the detection object) with respect to the positional deviation between the converging lens and the light detector in a height direction perpendicular to the projection surface to become large. Therefore, it will be suppressed that the detection range of a light component in the widthwise direction parallel to the projection surface will be smaller than the width of the projection surface, while accuracy in positioning the light detector in the height direction can be moderated.

With the projector in accordance with the above aspect of this invention, the light guide member is configured such that at least the reflected light outside the convergence range of the converging lens in a height direction perpendicular to the projection surface is not guided to the light detector to define the detection range of the projector in the height direction. With this configuration, just the detection range of a light component in the widthwise direction parallel to the projection surface is expanded, but the detection range of a light component in the height direction perpendicular to the projection surface is not expanded. Thus, just the reflected light reflected by the detection object near the projection surface and lower than a detection reference position can be accurately guided to the light detector. As a result, accuracy in positioning the light detector in the height direction can be moderated, while making false detection of a touch on the projection surface less likely.

With the projector in accordance with the above aspect of this invention, the light detector is spaced away from the converging lens by a distance that is greater than a dimension of the light detector in a height direction perpendicular to the projection surface. With this configuration, the light detector is separated from the converging lens, which effectively suppress an increase in the variance of the height of the touch detection with respect to the positional deviation between the converging lens and the light detector in the height direction perpendicular to the projection surface.

With the projector in accordance with the above aspect of this invention, the light guide member includes a mirror member that is configured to reflect the reflected light or a lens member that is configured to refract the reflected light. With this configuration, even though the light detector is disposed away from the converging lens, the reflected light that has been reflected by the detection object and passed through the converging lens can be easily guided to the light detector by the light guide member before spreading out. This is also accomplished by a simple configuration that makes use of the lens member or the mirror member. Consequently, the light detector can be separated from the converging lens, and variance in the height of the touch detection with respect to the positional deviation between the converging lens and the light detector in the height direction perpendicular to the projection surface can be easily prevented from becoming larger.

In this case, the light guide member includes the lens member that is disposed on an opposite side of the light detector relative to the converging lens. The light detector is spaced away from the converging lens by a distance that is greater than a distance between the converging lens and the lens member. With this configuration, the light detector can be separated from the converging lens. This effectively suppress an increase in the variance of the height of the touch detection with respect to the positional deviation between the converging lens and the light detector in the height direction perpendicular to the projection surface.

With the configuration in which the light guide member includes the lens member or the mirror member, the light guide member includes the lens member that is made of a prism. The prism is configured such that when the reflected light outside the convergence range of the converging lens in the widthwise direction is incident at a specific incidence angle, the reflected light is emitted toward the converging lens at an emission angle that is smaller than the incidence angle. With this configuration, even though the light detector is spaced away from the converging lens, the reflected light that has been reflected by the detection object and passed through the converging lens can be focused. Thus, the reflected light that has been reflected by the detection object and passed through the converging lens can be reliably guided to the light detector by the light guide member before spreading out.

With the configuration in which the light guide member includes the lens member or the mirror member, the light guide member includes a pair of mirror members that is disposed opposite relative to each other in the widthwise direction and is disposed between the converging lens and the light detector. The mirror members are configured to reflect the reflected light outside the convergence range of the converging lens in the widthwise direction therebetween to guide the reflected light to the light detector. With this configuration, even if the light detector is spaced away from the converging lens, the reflected light that has been reflected by the detection object and passed through the converging lens can be guided to the light detector while being reflected back by the pair of mirror members. Also, unlike when a lens member such as a prism whose refractive index or the like has been optimized is provided in order to guide to the light detector the reflected light outside the convergence range of the converging lens in the widthwise direction parallel to the projection surface, the reflected light that been reflected by the detection object and passed through the converging lens can be guided to the light detector before spreading out, even though the light detector and the converging lens are separated. This can also be accomplished with a simple configuration.

With the projector in accordance with the above aspect, the light guide member includes a low reflection-processed prism having a processed portion with a lower reflectivity than a portion other than the processed portion with respect to the reflected light outside the convergence range of the converging lens in a height direction perpendicular to the projection surface. The portion other than the processed portion refracts the reflected light outside the convergence range of the converging lens in the widthwise direction. With this configuration, even if a light component in the height direction reflected by the detection object outside the detection range above a detection reference position is incident on the low reflection-processed prism, this light will be less likely to be guided to the light detector. As a result, accuracy in positioning the light detector in the height direction can be moderated, while making false detection of the touch on the projection surface less likely.

With the present invention, as discussed above, accuracy in positioning of the light detector in the height direction can be moderated, while making it less likely that the detection range of a light component in a widthwise direction parallel to the projection surface will be smaller than the width of the projection surface.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of a projector in an upright position. Accordingly, these directional terms, as utilized to describe the projector should be interpreted relative to a projector in an upright position on a horizontal surface.

The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A projector comprising:
a light scanner configured to scan light over a projection surface;
a light detector configured to detect reflected light of the light that has been reflected by a detection object;
a converging lens disposed between the projection surface and the light detector to guide the reflected light within a convergence range of the converging lens to the light detector; and
a light guide member configured to refract or reflect at least the reflected light outside the convergence range of the converging lens in a widthwise direction parallel to the projection surface in plan view such that the reflected light within a detection range of the projector that is wider than the convergence range in the widthwise direction is guided to the light detector.

2. The projector according to claim 1, wherein
the light guide member is configured such that at least the reflected light outside the convergence range of the converging lens in a height direction perpendicular to the projection surface is not guided to the light detector to define the detection range of the projector in the height direction.

3. The projector according to claim 1 or 2, wherein
the light detector is spaced away from the converging lens by a distance that is greater than a dimension of the light detector in a height direction perpendicular to the projection surface.

4. The projector according to any one of claims 1 to 3, wherein
the light guide member includes a mirror member that is configured to reflect the reflected light or a lens member that is configured to refract the reflected light.

5. The projector according to any one of claims 1 to 4, wherein
the light guide member includes a lens member that is disposed on an opposite side of the light detector relative to the converging lens.

6. The projector according to claim 5, wherein
the light detector is spaced away from the converging lens by a distance that is greater than a distance between the converging lens and the lens member.

7. The projector according to any one of claims 1 to 6, wherein
the light guide member includes a lens member that is made of a prism, and
the prism is configured such that when the reflected light outside the convergence range of the converging lens in the widthwise direction is incident at a specific incidence angle, the reflected light is emitted toward the converging lens at an emission angle that is smaller than the incidence angle.

8. The projector according to any one of claims 1 to 7, wherein
the light guide member includes a pair of mirror members that is disposed opposite relative to each other in the widthwise direction and is disposed between the converging lens and the light detector, the mirror members being configured to reflect the reflected light outside the convergence range of the converging lens in the widthwise direction therebetween to guide the reflected light to the light detector.

9. The projector according to any one of claims 1 to 8, wherein
the light guide member includes a low reflection-processed prism that is disposed between the converging lens and the light detector, the low reflection-processed prism having a processed portion with a lower reflectivity than a portion other than the processed portion with respect to the reflected light outside the convergence range of the converging lens in a height direction perpendicular to the projection surface, with the portion other than the processed portion refracting the reflected light outside the convergence range of the converging lens in the widthwise direction.
